Europäisches Patentamt

European Patent Office

Office européen des brevets

(11) Publication number: **0 392 871**
**A2**

## (12) EUROPEAN PATENT APPLICATION

(21) Application number: 90304045.9

(22) Date of filing: 12.04.90

(51) Int. Cl.5: **A23N 17/02, A01F 29/06,**
**B02C 4/12, B02C 4/30**

(30) Priority: 14.04.89 IE 3776/89
14.04.89 IE 78/89

(43) Date of publication of application:
**17.10.90 Bulletin 90/42**

(84) Designated Contracting States:
**AT BE CH DE DK ES FR GB GR IT LI LU NL SE**

(71) Applicant: **SALFORD ENGINEERING LIMITED**

**Borris, County Carlow(IE)**

(72) Inventor: **Keenan, Richard**
**Walcott, Station Road**
**Bagenalstown, County Carlow(IE)**
Inventor: **Keenan, Gerard John**
**Dunlechney**
**Bagenalstown, County Carlow(IE)**
Inventor: **Keenan, Richard Michael**
**Kilcarrig**
**Bagenalstown, County Carlow(IE)**

(74) Representative: **Thiemann, Peter Albert**
**William et al**
**LLOYD WISE, TREGEAR & CO. Norman**
**House 105-109 Strand**
**London WC2R 0AE(GB)**

### (54) A chopper and apparatus for chopping.

(57) A chopper (1) comprises a framework (3) and a chopping drum (14) rotatably mounted in the framework (3). The drum (14) comprises a plurality of cutting blades (31) radially extending from and circumferentially spaced apart around the drum (14). Each blade terminates in a longitudinally extending cutting edge (48). A pair of pressure plates (51) urged by compression springs (53) towards but not against the drum (14) define with the drum (14) a passageway (28) for the passage of material to be chopped. The drum (14) and blades (31) co-operate with the pressure plates (51) for chopping ·material in the passageway (28). Stop members (63) extend from the pressure plates (51) and engage members (62) for retaining the pressure plates (51) spaced apart from the drum (14) and the cutting edges (48) of the blades (31). A hopper (70) delivers material to be chopped into the passageway (28).

The chopper (1,84) may be mounted on washing and chopping apparatus (80) for washing and chopping fodder beet.

FIG. 1

FIG. 4

# A CHOPPER AND APPARATUS FOR CHOPPING

The present invention relates to a chopper for chopping material, the chopper being of the type comprising a housing and a chopping means for chopping the material mounted in the housing. The invention further relates to apparatus for chopping material, the apparatus being of the type comprising a container defining an interior region for the material, and a chopper for chopping the material.

Where material and in particular root crop vegetables such as fodder beet is to be chopped prior to feeding to animals, it is generally necessary to first wash the root crop vegetables. In general, a considerable amount of soil tends to adhere to the surface of the vegetables. For efficient feeding, and also to avoid injurious consequences to the animal, it is essential that root crop vegetables should first be washed prior to being chopped. This requires loading the root crop vegetables into a washing container, where they are washed, usually by immersing them in water. The vegetables are then transferred to a chopper for chopping. In general, it is necessary to physically transfer the washed vegetables from the washing container to the chopper, and this may be done either manually or by suitable conveying apparatus. This presents considerable difficulties, in that it is time consuming, labour intensive, and furthermore, can lead to loss, wastage and soiling of the vegetables between the washing container and chopper.

Choppers which are generally used for chopping root crop vegetables, and in particular fodder beet and the like tend to be relatively inefficient. For example, European Patent Specification No. 0,135,497 discloses a chopper which comprises a housing defining a chopping chamber within which the material is chopped. A rotor is rotatable in the chopping chamber and carries a plurality of discs which terminate in radially extending cutting blades having circumferentially extending cutting edges. The material to be chopped is fed axially into the chopping chamber and may be dispensed radially or axially from the chamber. It has been found that because of the construction and arrangement of the cutting blades this device tends to be relatively inefficient, and the chopped particles tend to be of variable size.

There is therefore a need for a chopper and chopping apparatus for chopping material, and in particular, root crop vegetables which overcomes the problems of known choppers and apparatus.

The present invention is directed towards providing such apparatus.

The invention overcomes the problems of prior art choppers by virtue of the fact that the chopper comprises a housing, and a chopping means for chopping the material mounted in the housing, and the housing comprises a side wall, and the chopping means comprises a chopping drum defining an outer circumferential drum surface and having a central longitudinal axis, the chopping drum being rotatably mounted in the housing about the central longitudinal axis with the outer drum surface spaced apart from the side wall, the outer drum surface defining with the side wall a passageway for the passage of material to be chopped, and at least one cutting blade extending radially from the outer drum surface and terminating in an elongated cutting edge extending in a generally longitudinal direction relative to the chopping drum and co-operating with the side wall of the housing for chopping the material.

The advantages of the invention are many. A particularly important advantage of the invention is that it provides a chopper which chops material and in particular root crop vegetables such as, for example, fodder beet, into relatively small particles of relatively similar size. Furthermore, the chopper provides a relatively simple and straightforward construction of chopper. Additionally, the chopper according to the invention is relatively efficient, and in general, it has been found to be more efficient than choppers known heretofore.

Preferably, a plurality of cutting blades are provided, the cutting blades being circumferentially spaced apart around the chopping drum.

The advantage of this feature of the invention is that it provides an even more efficient chopper, and furthermore, provides for the chopped particle size to be relatively constant.

In another embodiment of the invention, the housing comprises a pair of spaced apart end walls extending generally transversely relative to the side wall, the chopping drum being rotatably mounted in the end walls, and guide means are provided for guiding the material to be chopped into the passageway.

The advantage of this feature of the invention is that it provides a relatively efficient, simply constructed and relatively maintenance free chopper.

In a further embodiment of the invention, the side wall of the housing comprises a pressure plate resiliently urged towards the chopping drum and engagable with stop means for retaining the pressure plate spaced apart from the outer drum surface, the pressure plate being pivotally connected to the housing about a pivot axis, the pivot axis extending in a generally longitudinal direction relative to the central longitudinal axis of the chopping drum.

The advantage of this feature of the invention is that it permits the chopper to accommodate relatively unyielding articles, such as, for example, stones and the like, without causing damage to the chopper. On a stone or other unyielding object passing through the passageway between the chopping drum and the pressure plate, the pressure plate pivots outwardly, thereby permitting the stone to pass through the passageway without damaging the drum, cutting blade, pressure plate or the like.

In another embodiment of the invention, each cutting blade is bent adjacent the cutting edge for directing the cutting edge towards the direction of rotation of the chopping drum.

The advantage of this feature of the invention is that it provides an even more efficient chopper.

Preferably, the outer drum surface is defined by a plurality of drum segments extending generally longitudinally of the drum and being spaced apart circumferentially around the central longitudinal axis, each pair of adjacent drum segments defining an elongated slot therebetween extending in a generally longitudinal direction relative to the chopping drum for accommodating a respective cutting blade extending therethrough.

The advantage of this feature of the invention is that it provides for a relatively straightforward and relatively simple construction of chopper. Further, it permits the chopping drum to be repaired readily easily in the event of damage caused by a stone or the like. Where only one blade or drum segment has been damaged, the damaged blade and/or drum segment can readily easily be replaced without dismantling the entire chopping drum. A further advantage of this feature of the invention is that it facilitates the blades to be mounted in the chopping drum with the cutting edge relatively close to the outer drum surface.

In a further embodiment of the invention, the drum segments are divided intermediate their longitudinal length to form sets of drum segments, the sets of drum segments being arranged in side by side relationship relative to each other longitudinally of the chopping drum, the slots defined by each set of drum segments being offset from the slots defined by the other sets of drum segments.

The advantage of this feature of the invention is that it reduces the load required to drive the chopping drum, and distributes the load more evenly over each revolution of the chopping drum.

The invention overcomes the problems of prior art washing and chopping apparatus by virtue of the fact that the invention provides apparatus for chopping material of the type comprising a container defining an interior region for the material, and a chopper for chopping the material, wherein the interior region of the container forms a washing compartment for washing the material prior to chopping, agitating means being mounted in the interior region of the container for agitating the material during washing, the container being provided with a material outlet from the interior region, and a washing liquid outlet from the interior region, a closure member for closing the washing liquid outlet, the closure member being openable for sluicing the washing liquid from the interior region, the chopper being mounted for receiving material from the material outlet.

The advantage of this aspect of the invention is that it provides apparatus for washing and chopping material, in particular root crop vegetables, such as, for example, fodder beet, which provides well washed and chopped particles. Furthermore, by virtue of the fact that the material such as, for example, fodder beet, is washed prior to chopping, the material being chopped is clean and in general free from muck, dirt and other contamination. Furthermore, by virtue of the fact that the chopper is mounted to receive the material to be chopped from the material outlet of the washing compartment, virtually no contamination of the material takes place between washing and chopping. Where the chopper is provided by the chopper according to the invention, a further advantage is achieved by virtue of the fact that the chopped particles are of relatively similar size.

In another embodiment of the invention, the chopper is movable from an operable position for receiving the material from the material outlet to an inoperable position spaced apart from the material outlet for permitting material to be dispensed from the apparatus unchopped.

The advantage of this feature of the invention is that it provides a relatively versatile apparatus which may be used for mixing and dispensing material and may also be used for washing and chopping material. In particular, the apparatus is suitable for mixing and dispensing animal feed, and also for washing and chopping fodder beet. Where the apparatus is to be used for mixing and dispensing animal feed, the chopper is moved into the inoperable position.

Preferably, the washing liquid outlet is provided from the bottom of the interior region and the material outlet is provided in a side wall of the container, the chopper being pivotally mounted on the container adjacent a lower edge of the material outlet.

The advantage of this feature of the invention is that it provides for relatively effective and efficient washing.

In another embodiment of the invention, guide means are mounted between the material outlet and the chopper for guiding the material from the material outlet into the chopper, the guide means being pivotally mounted on the chopper and being pivotal from a position for directing material from the material outlet to the chopper to a position protecting the chopper, a closure member being mounted on the container for closing the material outlet, the closure member being movable from a position closing the material outlet to a position forming part of the guide means, the closure member being pivotally mounted along an upper edge of the material outlet.

The advantage of this feature of the invention is that it provides a relatively efficient and simply operated and constructed apparatus.

In another embodiment of the invention, the interior region of the container forms a mixing compartment and a dispensing compartment, closure means being mounted in the interior region for selectively isolating the dispensing compartment from the mixing compartment, the mixing compartment forming the washing compartment, and the agitating means being mounted in the mixing compartment, the material outlet being provided from the dispensing compartment, and dispensing means being mounted in the dispensing compartment for dispensing material through the material outlet.

The advantage of this feature of the invention is that the apparatus, while being suitable for washing and chopping material, is also particularly suitable for mixing and dispensing material, such as, for example, animal feed rations and the like.

In a further embodiment of the invention, the mixing compartment comprises a base of substantially semi-circular cross section and a pair of spaced apart longitudinally extending side walls extending upwardly from each side of the base, and a pair of spaced apart end walls extending between the base and the side walls, the dispensing compartment extending sidewardly outwardly from and longitudinally relative to the mixing compartment and being formed by a wall disposed between the base and one side wall, the chopper being pivotal into the inoperable position beneath the dispensing compartment.

The advantage of this feature of the invention is that is provides a relatively efficient apparatus both for mixing and dispensing material and also for washing and chopping the material.

In a still further embodiment of the invention, the chopper is a chopper according to the invention.

The advantage of this feature of the invention is that it provides chopped particles of relatively similar and constant size, and furthermore, it provides a relatively efficient and simple construction of apparatus.

The invention will be more clearly understood from the following description of some preferred embodiments thereof, given by way of example only, with reference to the accompanying drawings, in which:

Fig. 1 is a perspective view of a chopper according to the invention,

Fig. 2 is a front elevational view of the chopper of Fig. 1,

Fig. 3 is a rear elevational view of the chopper of Fig. 1,

Fig. 4 is a partly sectional end view of the chopper of Fig. 1,

Fig. 5 is an exploded perspective view of the chopper of Fig. 1,

Fig. 6 is an end view of portion of the chopper of Fig. 1,

Fig. 7 is a perspective view of part of the portion of Fig. 6,

Fig. 8 is a perspective view of a detail of the chopper of Fig. 1.

Fig. 9 is a perspective view of apparatus for washing and chopping material,

Fig. 10 is a perspective view of the apparatus of Fig. 9 in a different position,

Fig. 11 is a cut-away perspective view of portion of the apparatus of Fig. 9,

Fig. 12 is a cut-away perspective view of the portion of Fig. 11 in a different position,

Fig. 13 is a sectional end view of the portion of Fig. 11,

Fig. 14 is a sectional end view of portion of the apparatus of Fig. 9,

Fig. 15 is a sectional end view of the portion of Fig. 14 in a different position,

Fig. 16 is a perspective view of another detail of the apparatus of Fig. 9,

Fig. 17 is an end view of another detail of the apparatus of Fig. 9,

Fig. 18 is another end view of the detail of Fig. 17,

Fig. 19 is a perspective view of another detail of the apparatus of Fig. 9,

Fig. 20 is a perspective view of another portion of the apparatus of Fig. 9,

Fig. 21 is a perspective view of apparatus according to another embodiment of the invention for washing and chopping material,

Fig. 22 is a perspective view of the apparatus of Fig. 21 from another end,

Fig. 23 is a front perspective view of the apparatus of Fig. 21,

Fig. 24 is a plan view of the apparatus of Fig. 21,

Fig. 25 is a partly cut-away perspective front view of the apparatus of Fig. 21,

Fig. 26 is a side sectional elevational view of the apparatus of Fig. 21,

Fig. 27 is a sectional end view of the apparatus of Fig. 21,

Fig. 28 is a perspective view of a detail of the apparatus of Fig. 21,

Fig. 29 is a side elevational view of the apparatus of Fig. 21 in use,

Fig. 30 is a view similar to Fig. 29 of the apparatus of Fig. 21 in use in a different position, and

Fig. 31 is a perspective view of a further detail of the apparatus of Fig. 21.

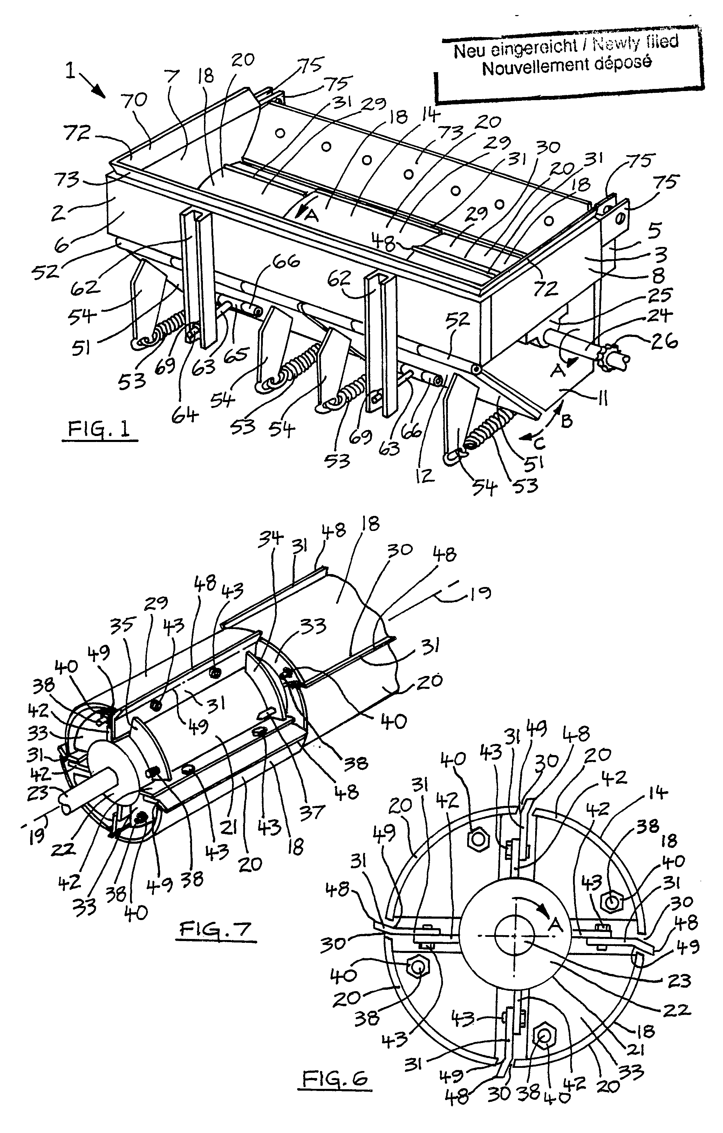

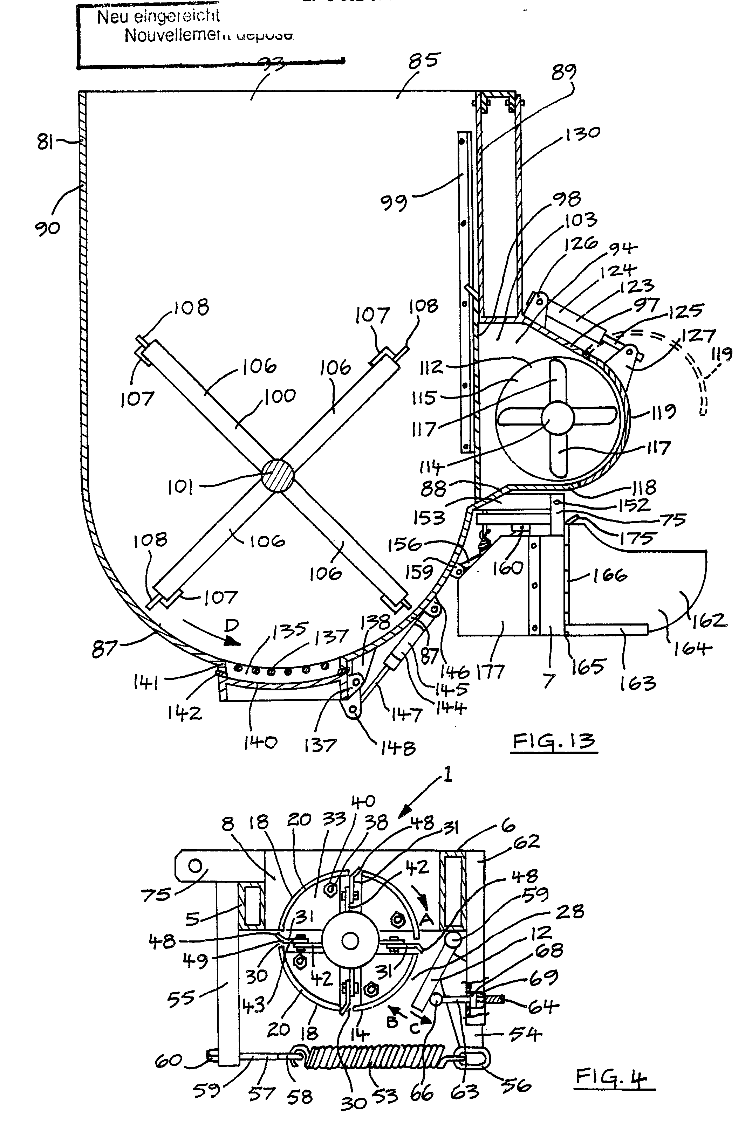

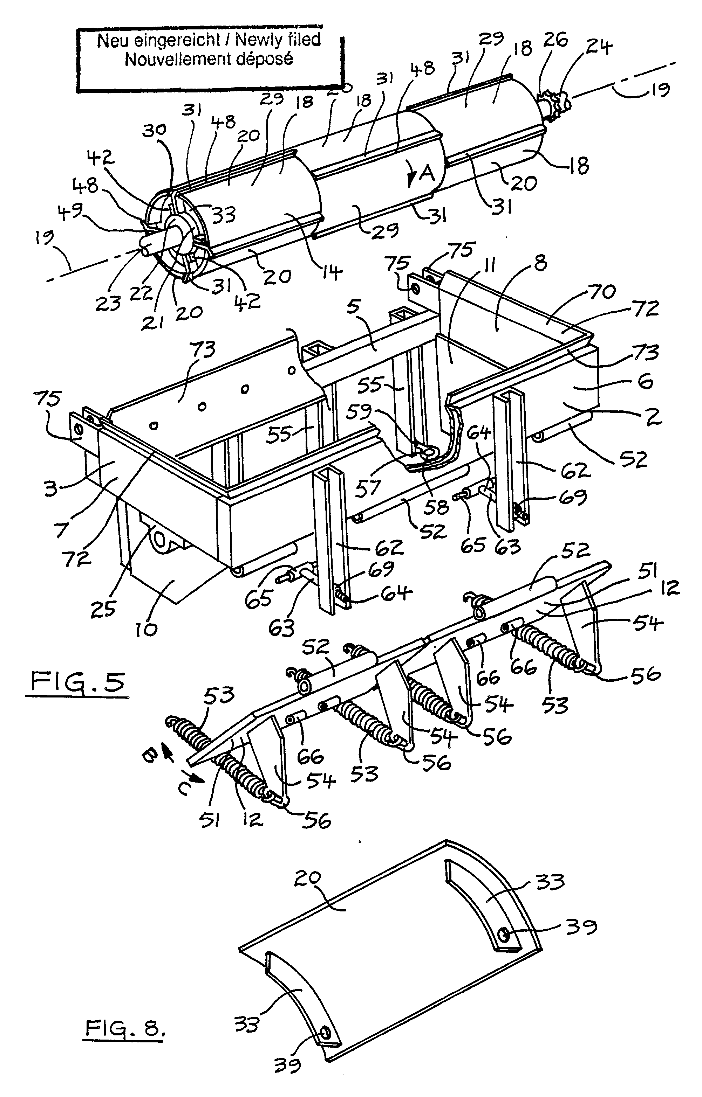

Referring to the drawings, and initially to Figs. 1 to 8, there is illustrated a chopper according to the invention indicated generally by the reference numeral 1 for chopping material, in this case root crop vegetables and, in particular, fodder beet. The chopper 1 comprises a housing 2 formed by a framework 3 comprising a pair of spaced apart elongated side members 5 and 6 joined by spaced apart end cross members 7 and 8. The side members 5 and 6 and cross members 7 and 8 are of box section steel. A pair of end walls 10 and 11 of steel extend downwardly from the cross members 7 and 8 and extend generally transversely from a side wall 12 which extends downwardly from the side member 6 as will be described below.

Chopping means for chopping the fodder beet comprises an elongated chopping drum 14 mounted in the framework 3. The chopping drum 14 defines an outer circumferential drum surface 18 of substantially circular cross section and defines a central longitudinal axis 19. The drum surface 18 is formed by a plurality of drum segments 20 of steel mounted on an inner drum 21 also of steel. The drum segments 20 are described in detail below. The inner drum 21 terminates in end caps 22 of steel which carry respective stub shafts 23 and 24 of steel. Bearings 25 on the cross members 7 and 8 rotatably support the stub shafts 23 and 24 for rotatably mounting the chopping drum 14 about its central longitudinal axis 19 in the framework 3. A sprocket 26 is fixed on the stub shaft 24 for driving the chopping drum 14. A motor (not shown) drives the chopping drum 14 by a chain drive (also not shown) around the sprocket 26 in the direction of the arrow A. The chopping drum 14 is mounted in the framework 3 so that the outer drum surface 18 is set spaced apart from the side wall 12 and defines with the side wall 12 a passageway 28 for the passage of fodder beet to be chopped. This is described below. The passageway 28 is closed by the end walls 10 and 11.

The drum segments 20 are arranged in three sets 29, each set 29 comprising four drum segments 20, and the sets 29 are arranged in side by side relationship longitudinally of the chopping drum 14. The drum segments 20 of each set 29 extend longitudinally of the chopping drum 14 and are arranged spaced apart around the central longitudinal axis 19. Adjacent drum segments 20 define a slot 30 which accommodates a cutting blade 31 as will be described below. Brackets 33 extending from the drum segments 20 engage corresponding brackets 34 and 35 mounted on the inner drum 21. Locating pins 37 and 38 extending respectively from the brackets 34 and 35 engage corresponding holes 39 in the brackets 33 for locating the drum segments 20 in position around the inner drum 21. The locating pin 38 is threaded for receiving nuts 40 for securing the drum segments 20 to the inner drum 21.

The cutting blades 31 are mounted on brackets 42 which are mounted on and extend radially and longitudinally of the inner drum 21. Screws 43 secure the cutting blades 31 to the brackets 42. The cutting blades 31 extend radially from the inner drum 21 and extend through the slots 30 outwardly and substantially radially of the outer drum surface 18. The cutting blades 31 are arranged spaced apart circumferentially, at 90° intervals around the chopping drum 14. Each cutting blade 31 terminates in a cutting edge 48 which extends in a generally longitudinal direction relative to the chopping drum 14. Each cutting blade 31 is bent at 49 adjacent the cutting edge 48 for directing the cutting edge 48 towards the direction of rotation of the chopping drum 14. The cutting edges 48 of the cutting blades 31 are spaced apart from the side wall 12, and with the drum 14 cooperate with the side wall 12 for chopping fodder beet passing through the passageway 28.

The drum segments 20 of each set 29 are arranged so that the slots 30 defined by the drum segments 20 of each set are circumferentially offset from the slots 30 defined by the drum segments 20 of the other sets 29 of drum segments.

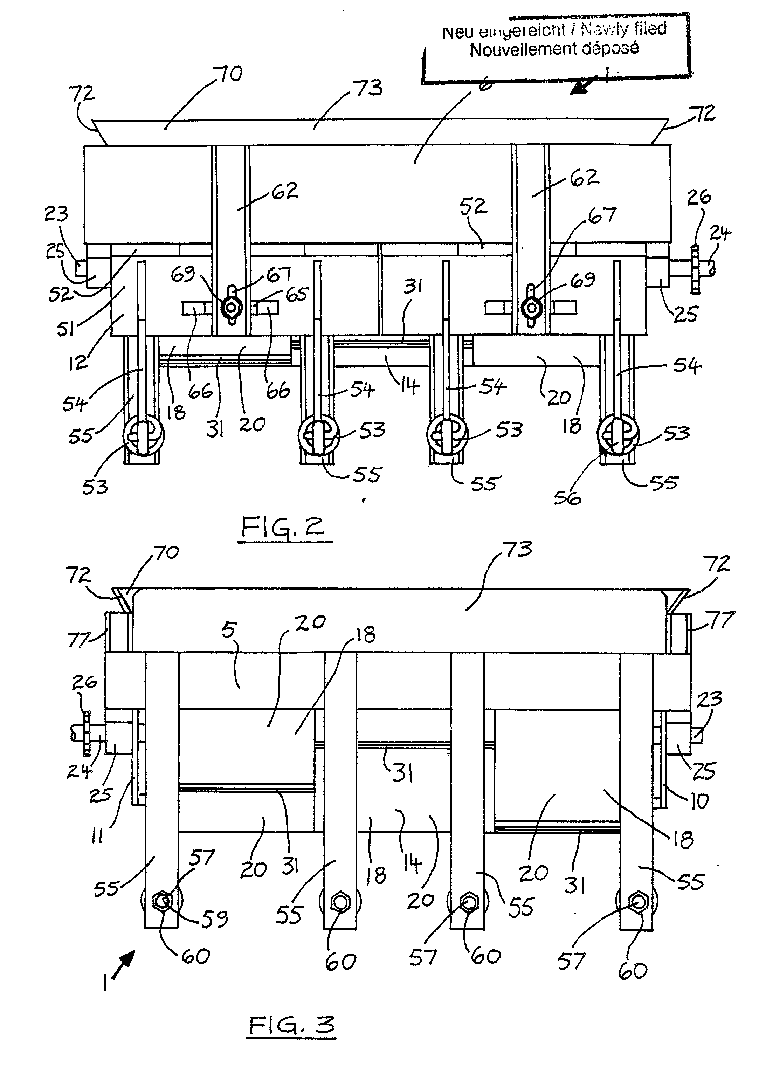

The side wall 12 in this embodiment of the invention is provided by a pair of pressure plates 51 of steel which are pivotally mounted by a piano type hinge 52 mounted on the side member 6. The hinge 52 defines a pivot axis which is parallel and spaced apart from the central longitudinal axis 19 of the chopping drum 14. The pressure plates 51 are resiliently urged towards the chopping drum 14 by tension springs 53 extending between brackets 54 and 55. The pressure plates are pivotal outwardly against the spring tension in the direction of the arrow C to accommodate stones or the like to avoid damage to the drum segments and blades. The brackets 54 are of steel and extend downwardly from the pressure plates 51 and the brackets 55 are of box section steel and extend downwardly from the side member 5. Eye members 56 on the brackets 54 engage respective springs 53. Adjustable eye members 57 adjustably engage respective brackets 55 for securing the springs 53 to the brackets 55. Each eye bracket 57 comprises an eye 58 for engaging a respective spring, and a threaded shaft 59 extending from the eye 58. The shaft 59 engages a hole (not shown) in a respective bracket 55. A nut 60 on the shaft 59 provides for adjustment of the eye bracket 57 relative to the bracket 55 for varying the tension in the springs 53. Adjustable stop means for retaining the pressure plates 51 spaced apart from the chopping drum 14 and the cutting blades 31 comprise a pair of stop members 62 of channel section steel extending downwardly from the side member 6 which engage engagement members 63 extending from the pressure plates 51. Each engagement member 63 is of T-shaped construction having a threaded shaft 64 extending from a cross member 65. The cross members 65 pivotally engage pivot mounting brackets 66 of circular section tubular steel mounted on the plate members 51. The shafts 64 engage corresponding slots 67 in the stop members 62. Rubber bushings 68 retained in position on the shafts 64 by lock nuts 69 engage the stop members 62 to limit travel of the pressure plates 51 in the direction of the arrow B towards the chopping drum 14 and the cutting blades 31, see Fig. 2. The position of the bushings 68 may be varied on the shafts 64 for varying the width of the passageway 28, in other words, the distance between the outer drum surface 18 and the pressure plates 51. By varying the width of the passageway 28 the size of the chopped particles can be varied.

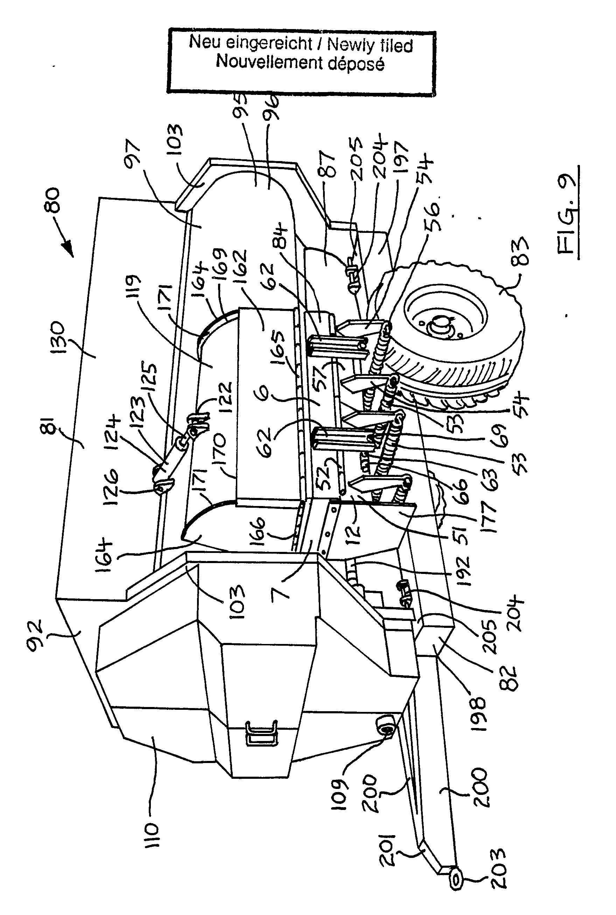

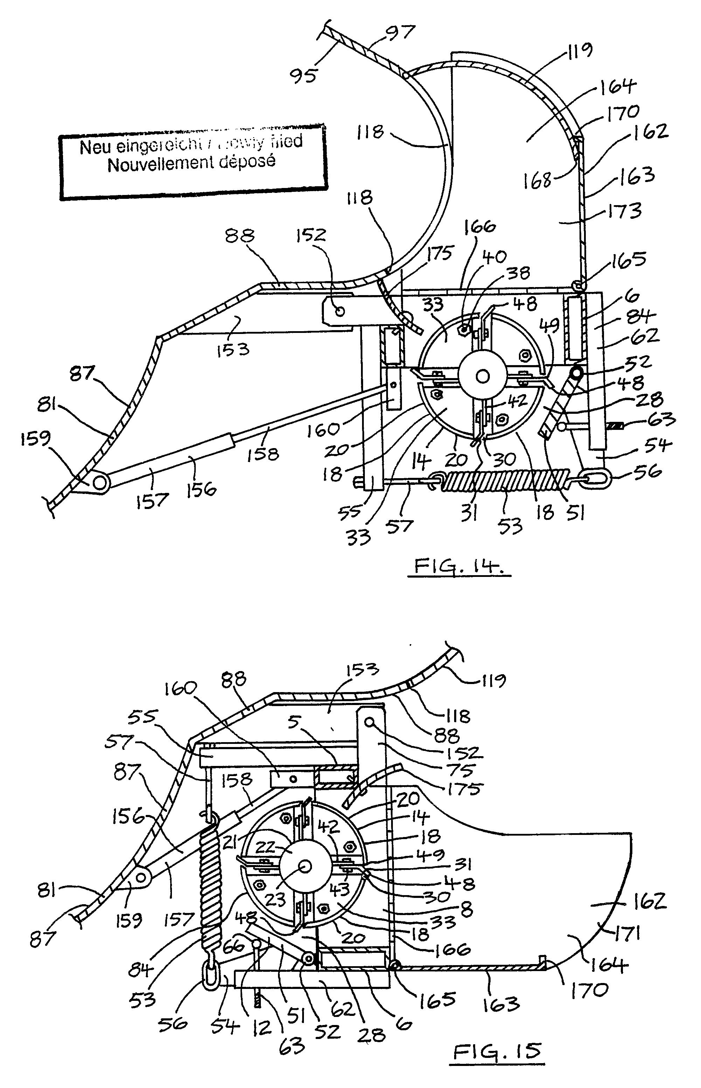

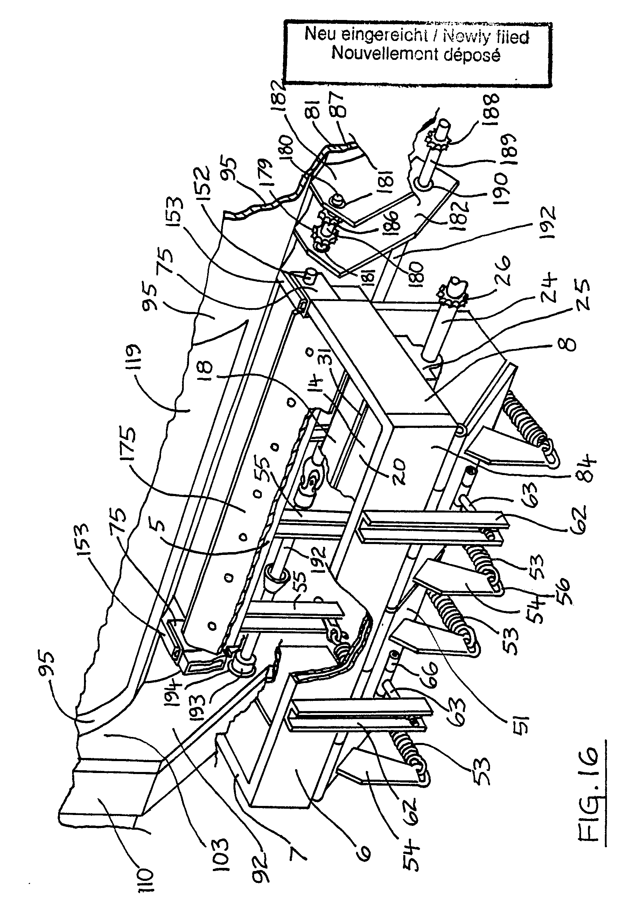

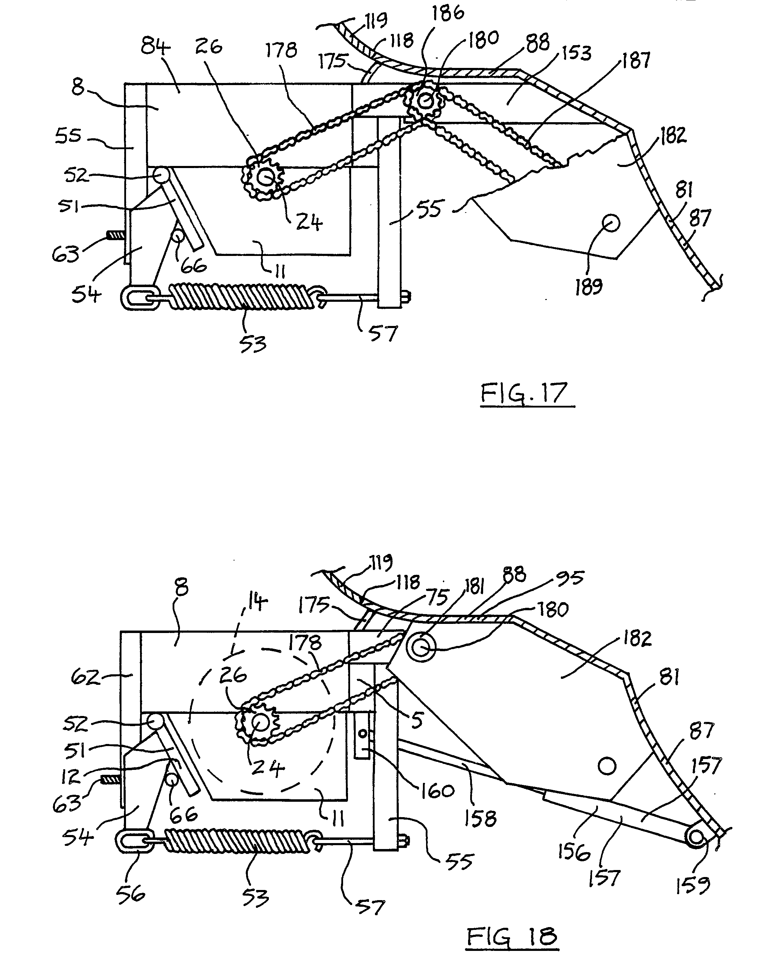

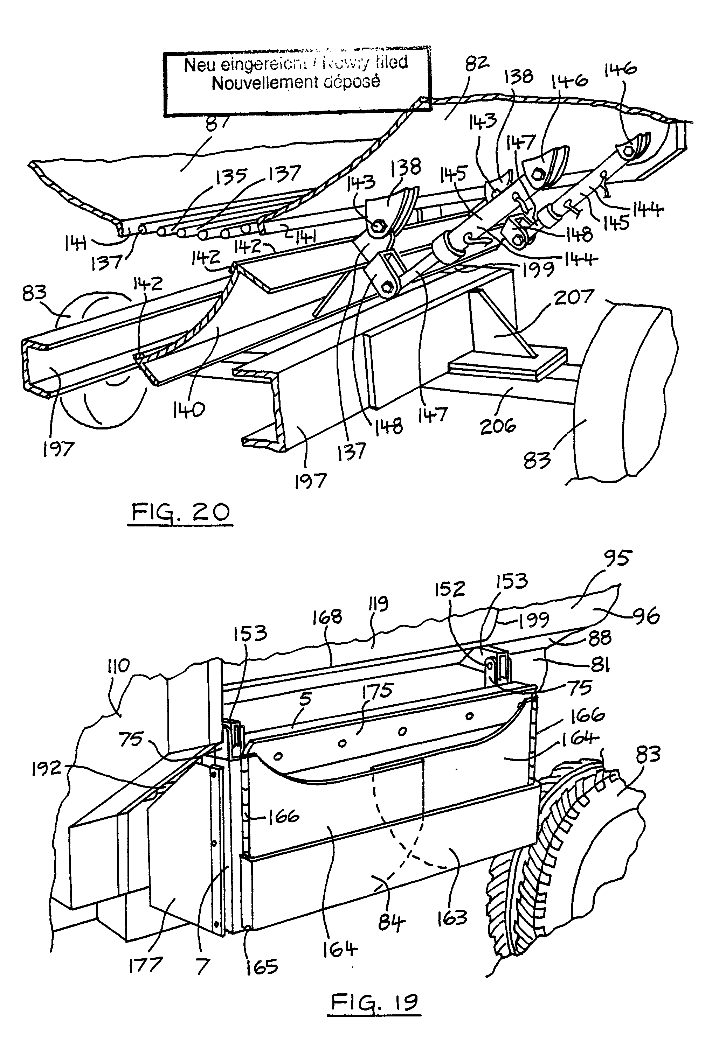

Guide means for directing material to be chopped into the passageway 28 comprises a hopper 70 extending upwardly from the framework 3. The hopper 70 comprises a pair of end walls 72 joined by side walls 73. A mounting framework (not shown) is provided for mounting the chopper 1 free standing on the ground. Alternatively, the chopper 1 is provided with mounting brackets 75 extending from the side member 5 for mounting the chopper 1 on washing and chopping apparatus as will be described below with reference to Figs. 9 to 20.

In this embodiment of the invention, the radius of the outer circumferential surface 18 defined by the drum segments 20 is 145 mm. The radius of the cutting edge 48 of each blade 31 from the central longitudinal axis is 160 mm. Accordingly, in this embodiment of the invention, the difference in the radii of the cutting edge 48 of the blade 31 and the outer circumferential surface 18 of the drum 14 is 15 mm, in other words the length of the cutting blade 31 extending radially from the outer circumferential surface 18 of the chopping drum 14 is 15 mm. Thus, the ratio of the difference of the radii of the cutting edges 48 and the outer circumferential surface 18 of the drum 14 to the radius of the outer circumferential surface 18 is 3:29. It is, however, believed that a chopper with a chopping drum 14 will provide adequate results where the ratio of the difference in the radii of the cutting edges 48 and the outer circumferential surface 18 to the radius of outer circumferential surface 18 of the drum 14 is in the range of 1:30 to 1:2. Particularly good results are achieved with a ratio in the range of 1:30 to 3:20. While the outer circumferential surface 18 of the drum 14 and the radius of the cutting edge 48 of the cutting blades 31 will vary depending on the size of the chopper and the material being chopped, it is believed that a chopping drum with an outer circumferential surface 18 having a radius in the range of 100 mm to 300 mm and with cutting blades 31 where the radial length of the blades extending from the outer circumferential surface 18 of the chopping drum 14 is 10 mm to 50 mm will provide particularly good results for chopping fodder beet and other root crop vegetables.

The distance of the nearest point of the cutting edges 48 of the cutting blades 31 to the inner surface of the pressure plates 51 will vary, depending on how the stop means, in other words the bushings 68 on the shafts 64, are adjusted. It is envisaged that for chopping fodder beet the optimum distance is 10 mm. However, good results would be achieved with a distance between the cutting edge 48 of the blades 31 and the inner surface of the pressure plate 51 in the range of 3 mm to 25 mm.

In use, the chopping drum 14 is rotated in the direction of the arrow A by the motor (not shown) or other drive means. In general, the chopping drum 14 is rotated at a rotational speed of 270 revs per minute. Material to be chopped, for example, fodder beet or other root crop vegetables is fed into the hopper 70. The rotation of the chopping drum 14 in the direction of the arrow A causes the material to be chopped to be drawn into the passageway 28. As the material is drawn through the passageway 28, the action of the cutting blades 31 co-operating with the pressure plates 51 cause the material to be chopped into particles of relatively constant size. Where the chopper 1 is used for chopping fodder beet, the action of the cutting blades 31 as the chopping drum 14 rotates initially chops relatively large portions from the fodder beet which large portions are then passed through the passageway 28. On passing through the passageway 28 the action of the cutting blades 31 co-operating with the pressure plates 51 causes chopping of the portions chopped from the fodder beet into chopped particles of relatively constant size. On a stone or other unyielding object being drawn into the passageway 28, the action of the stone on the pressure plate 51 or pressure plates 51 causes the pressure plate or plates 51 to pivot outwardly in the direction of the arrow C against the spring tension. Thus, the stone passes through the passageway 28 with relatively little damage being caused and in most cases virtually no damage being caused to the pressure plates 51, the drum segments 20 and the cutting blades 31. The advantage of providing two pressure plates 51 is that where a stone only engages one pressure plate 51, only the pressure plate engaged pivots outwardly, thus material passing between the chopping drum 14 and the other pressure plate 51 is chopped normally.

The size of the chopped particles is varied by varying the spacing between the pressure plates 51 and the outer circumferential surface 18 of the chopping drum 14. This is achieved by altering the positions of the busing 68 along the shafts 64 by screwing the nuts 69 along the threaded portion of the shafts 64. The closer the pressure plates 51 are set relative to the outer circumferential surface 18 of the chopping drum the smaller will be the particle size. In other words, the smaller the distance between the pressure plates 51 and the outer circumferential surface 18 of the chopping drum 14, the smaller will be the particle size. To increase the particle size, the pressure plate 51 is adjusted outwardly from the chopping drum 14.

Referring now to Figs. 9 to 20 there is illustrated apparatus according to the invention indicated generally by the reference numeral 80 for washing and chopping material, for example root crop vegetables for animal feed, such as fodder beet. The apparatus 80 may also be used for mixing and dispensing animal feed and insofar as the apparatus 80 is used for mixing and dispensing animal feed, the apparatus 80 is substantially similar to dispensing apparatus described in British Patent Specification No. 2,139,911. The apparatus 80 comprises a container 81 supported on a chassis 82 which carries ground engaging wheels 83. A chopper 84 for chopping the root crop vegetables is pivotally mounted on the container 81 as will be described below. The chopper 84 is substantially similar to the chopper 1 and similar components are identified by the same reference numerals. Before describing the mounting arrangement of the chopper 84, the container 81 will first be described.

The container 81 comprises a base 87 of steel plate material of substantially semi-circular cross section. Side walls 89 and 90 of steel plate extend upwardly and longitudinally from opposite sides of the base 87. End walls 91 and 92 of steel plate extend between the base 87 and the side walls 89 and 90 and define therewith an interior region which forms a mixing and/or washing compartment 93 for mixing and/or washing material. The side walls 89 and 90 and end walls 91 and 92 define an open mouth 85 which provides access to the compartment 93. Where the apparatus 80 is to be used for washing and chopping fodder beet, the mixing and/or washing compartment 93 is used for washing the fodder beet.

A dispensing compartment 94 extends longitudinally of the mixing and washing compartment 93 and is formed by a side wall 95 of steel plate. The side wall 95 extends at 88 sidewardly outwardly of the base 87, is curved at 96 and extends upwardly inwardly at 97 to engage the side wall 89. The dispensing compartment is closed at the ends by end walls 103 which are formed by extensions of the end walls 91 and 92. Accordingly, the base 87, side walls 89 and 90, end walls 91 and 92 and the side wall 95 together define an interior region which forms the mixing and washing compartment 93 and the dispensing compartment 94.

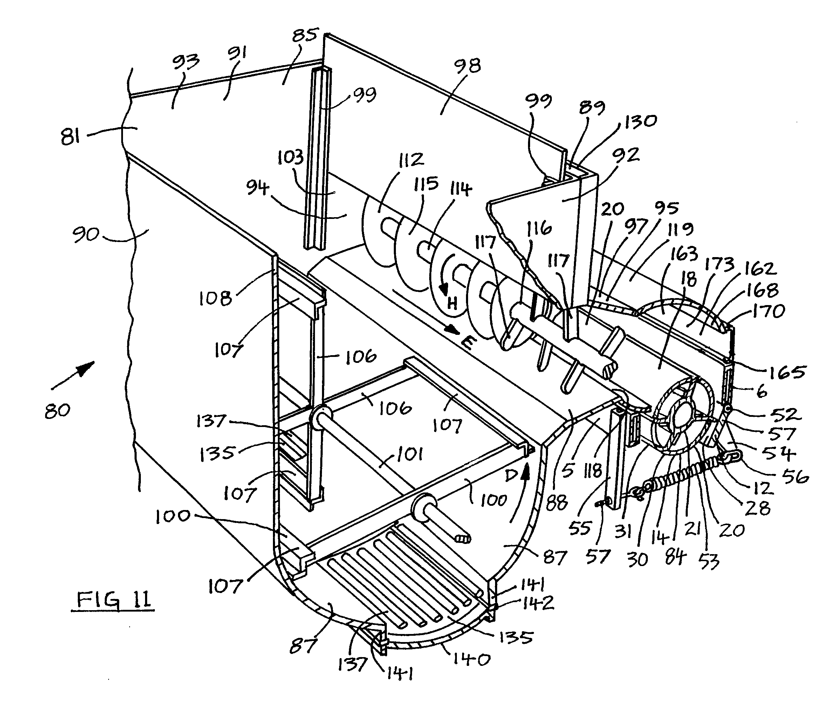

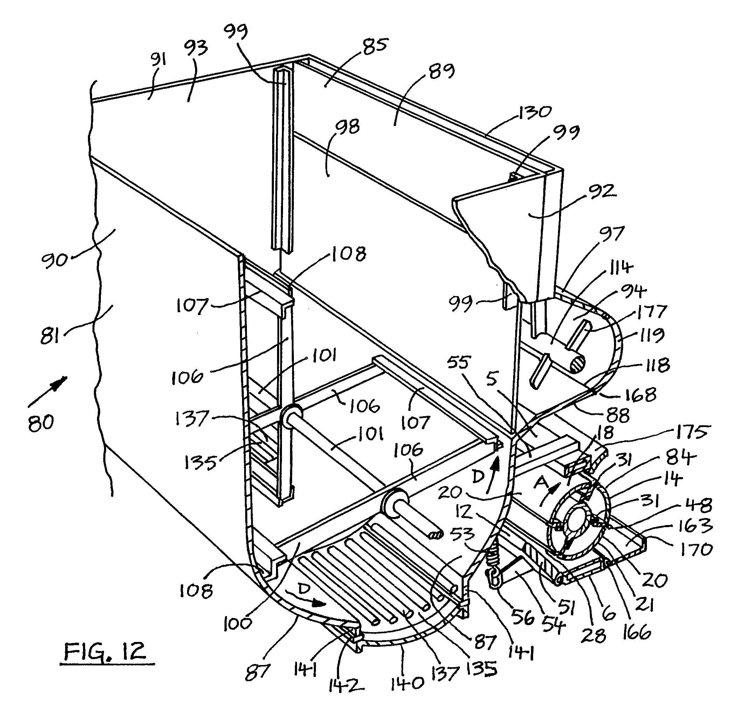

Closure means, namely a partition door 98 of steel plate slidable in guides 99 of angle section steel on each end wall 91 and 92 selectively isolates the dispensing compartment 94 from the mixing and washing compartment 93. The partition door 98 is illustrated in the open position in Fig. 11 with the dispensing compartment 94 communicating with the mixing and washing compartment 93. The partition door 98 is illustrated in the closed position in Fig. 12 with the two compartments 93 and 94 isolated from each other. Hydraulic rams (not shown) mounted between the side wall 89 and a casing 130 raises and lowers the partition door 98 for respectively communicating and isolating the compartments 93 and 94.

A dispensing outlet 118 which forms a material outlet through which material is dispensed from the dispensing compartment 94 to the chopper 84 is provided in the curved portion 96 of the side wall 95. A closure member, namely, a door 119 of arcuate shape corresponding to the shape of the side wall 95 at 96 closes the outlet 118. The door 119 is pivotally mounted to the side wall 95 by brackets 120 which engage pivot members 122 extending from the door 119. A hydraulic ram 123 comprising a cylinder 124 and piston rod 125 open and close the door 119. The cylinder 124 is pivotally connected to a bracket 126 mounted on the side wall 95, while the piston rod 125 is pivotally connected to a bracket 127 mounted on the door 119.

Agitating means for mixing and/or agitating the root crop vegetables during washing comprises a rotor 100 rotatably mounted in the mixing and washing compartment 93. The rotor comprises an elongated shaft 101 rotatably mounted in bearings (not shown) in the end walls 91 and 92. Carrier members 106 extending radially outwardly of the shaft 101 carry paddles 107 of angle iron. Wiper members 108 of flexible plastics material extend radially from the paddles 107 and wipe the inner surface of the base 87 on rotation of the rotor 100. The paddles and carrier members are arranged in sets and the paddles 107 of each set are arranged at 180° relative to each other around the shaft while the paddles 107 of one set are arranged at 90° to the paddles 107 of the other set relative to the shaft 101. The rotational axis of the shaft 101 substantially co-incides with the axis of generation of the base 87. A main transmission means which does not form part of the invention is mounted adjacent the end wall 92 in a casing 110 for transmitting drive from an input shaft 109 to the rotor 100 which is rotated at a speed of 10.3 revs per minute approximately in the direction of the arrow D. Rotation of the rotor 100 in the direction of the arrow D agitates the fodder beet in the mixing and washing compartment 93 during washing and delivers the fodder beet into the dispensing compartment 94 when the partition door 98 is open. The main transmission means is clearly described in British Patent Specification No. 2,139,911. The shaft 109 is adapted for connection to a power take off of a tractor.

Dispensing means for dispensing material from the dispensing compartment 94 through the outlet 118 comprises an auger 112 of steel rotatably mounted in the dispensing compartment 94 about a rotational axis parallel to the rotational axis of the rotor 100. The auger 112 comprises a shaft 114 carrying auger flights 115 for urging material in the direction of the arrow E towards the outlet 118 on rotation of the auger 112 in the direction of the arrow H. The shaft 114 is rotatable in bearings (not shown) in the portions 103 of the end walls 91 and 92. The auger flights 115 terminate at 116 and spikes 117 of steel extending radially from the shaft 114 fling mixed material or washed fodder beet through the dispensing outlet 118 on rotation of the shaft 114. The main transmission means (not shown) in the casing 110 drives the auger shaft 114 at a rotational speed of 90 revs per minute.

A pair of washing liquid outlets 135 are provided in the base 87 of the mixing and washing compartment 93 for draining water or other washing liquid from the mixing and chopping compartment 93. A grid formed by bars 137 of steel extend longitudinally in the outlet 135 relative to the shaft 101 to prevent fodder beet passing through the outlet 135 on water being sluiced through the outlet 135. Closure members 140 sealably engage lips 141 extending from the respective outlets 135 to close the outlets 135, see Fig. 20. A gasket 142 extending round the closure member 140 sealably engages the lip 141. Each closure member 140 is hingedly mounted to the base 87 by two pairs of hinge brackets 137 and 138 pivotally connected by pivot pins 143. The pivot pins 143 define a pivot axis substantially parallel to the longitudinal axis of the shaft 101. Hydraulic rams 144 open and close the closure members 140. Each ram 144 comprises a cylinder 145 pivotally connected to the base 87 by a bracket 146 and a piston rod 147 pivotally connected to a bracket 148 mounted on the closure member 140.

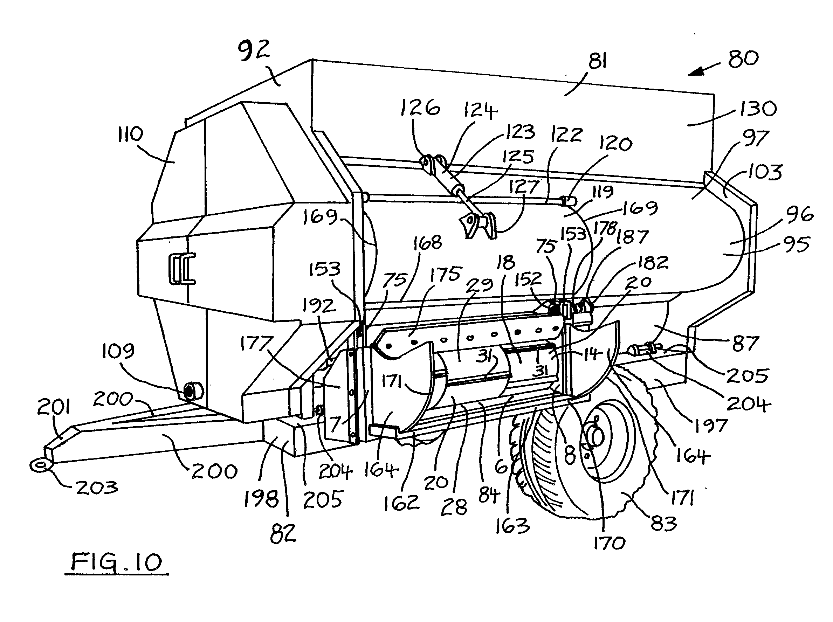

Returning now to the chopper 84 the chopper 84 is pivotally mounted on the container 81 beneath the material outlet 118 for receiving fodder beet from the outlet 118 to be chopped. The mounting brackets 75 extending from the side member 5 of the chopper 1 engage pivot shafts 152 carried on brackets 153 of box section steel mounted on the side wall 95 of the dispensing compartment 94 for pivoting the chopper 84. The pivot shafts 152 define a pivot axis which is parallel to the rotational axes of the rotor 100, the auger 112 and the chopping drum 14, and also to the pivot axis defined by the pivot pins 122 of the door 119. An hydraulic ram 156 pivots the chopper 84 about the pivot shafts 152 from an inoperable position beneath the outlet 118 and beneath the dispensing compartment 94 as illustrated in Fig. 10 to an operable position for receiving and chopping the fodder beet from the outlet 118 as illustrated in Fig. 9. The ram 156 comprises a cylinder 157 and a piston rod 158. The cylinder 157 is pivotally connected to the base 87 by brackets 159 and the piston rod 158 is pivotally connected to a bracket 160 extending downwardly from the side member 5 of the chopper 84.

Guide means for directing fodder beet from the outlet 118 to the passageway 28 of the chopper 84 comprises a hopper 162 having a side wall 163 and a pair of end walls 164. The side wall 163 and end walls 164 are hingedly connected respectively to the side member 6 and respective end cross members 7 and 8 for pivoting from the position illustrated in Fig. 9 forming the hopper 162 to the position illustrated in Fig. 19 closing the passageway 128 and protecting the chopping drum 14 when the chopper 84 is not in use. A hinge 165 connects the side wall 163 to the side member 6 while hinges 166 connect the end walls 164 to respective end cross members 7 and 8. The side wall 163 and end walls 164 are so arranged that when the door 119 pivots from a closed position closing the outlet 118 as illustrated in Fig. 10 to an open position as illustrated in Fig. 9, a front edge 168 and side edges 169 engage, respectively, the side wall 163 and end walls 164 adjacent their top edges 170 and 171 respectively to form a duct 173 for delivering the fodder beet from the outlet 118 to the passageway 128. An elongated strip 175 of flexible plastics material secured to the side member 5 engages the side wall 95 just beneath the outlet 118 thus substantially sealing the duct 173. The flexible strip 175 directs fodder beet onto the chopping drum 14. Side flaps 177 of flexible plastics material extending downwardly from the end cross members 7 and 8 direct the chopped material downwardly from the chopper.

A drive transmission means for driving the chopping drum 14 from the main transmission means (not shown) mounted in the casing 110 comprises a chain 178 and sprocket 179 which drives the sprocket 26 on the stub shaft 24. The sprocket 179 is fixed on a shaft 180 rotatably mounted in bearings 181 in brackets 182 welded to the side wall 95 and base 87. The rotational axis of the shaft 180 is axially aligned with the pivot shafts 152 about which the chopper 84 is pivoted. Accordingly, on pivoting of the chopper 84, the distance between the centre of the shafts 180 and the stub shaft 24 remains constant. A sprocket 186 also fixed on the shaft 180 is driven by a chain 187 from a sprocket 188 fixed on a drive shaft 189. The drive shaft 189 is rotatable in bearings 190 in the brackets 182. A drive shaft 192 drives the drive shaft 189 from a drive shaft 193 extending through a bearing 194 in the end wall 91 from the main transmission (not shown) mounted in the casing 110 at the end wall 92. In this embodiment of the invention, the chopping drum is driven at a rotational speed of 270 revs per minute similar to that of the chopper 1.

The chassis 82 comprises a pair of spaced apart longitudinal side members 197 joined by front and rear end cross members 198 and 199, all of channel iron respectively. A pair of forwardly directed members 200 also of channel iron extend from the front end cross member 198 and are welded together at 201. A hitch 203 is mounted on the members 200 at 201 for connecting the apparatus 80 to a tow bar of a tractor or the like. The container 81 is mounted on the chassis 82 by four load cells 204. The load cells are mounted at corners 205 on the chassis 82 and to the end walls 91 and 92. An axle 206 mounted on the chassis 82 by brackets 207 rotatably carries the wheels 83, see Fig. 20. Hydraulic hoses (not shown) deliver hydraulic oil to the hydraulic rams 123, 144 and 156. The hydraulic hoses (not shown) may be connected to the hydraulic system of a tractor. In general, controls in the cab of the tractor would permit control of the rams 123, 144 and 156. However, alternatively, the rams may be powered from a separate hydraulic source and suitable hydraulic control valves would be provided for permitting the rams 123, 144 and 156 to be operated.

In use, where it is desired to use the apparatus for mixing and dispensing material, such as, for example, animal feed and it is not desired to chop the animal feed, the chopper 84 is pivoted into the inoperable position illustrated in Fig. 10. The material to be mixed is loaded into the mixing and washing compartment 93 for mixing. Prior to the material being loaded into the mixing and washing compartment 93, the outlets 135 are closed by the closure members 140, and the partition door 98 is also closed, isolating the dispensing compartment 94 from the mixing and washing compartment 93. The rotor 100 is rotated in the direction of the arrow D for mixing the animal feed in the mixing and washing compartment 93. On the animal feed being adequately mixed, the partition door 98 and the door 119 are opened. Thus, as the rotor 100 continues to rotate, animal feed is fed from the mixing and washing compartment 93 into the dispensing compartment 94. The auger 112 rotating in the direction of the arrow H urges animal feed in the dispensing compartment 94 towards the outlet 118 where the spikes 117 fling the material through the outlet 118.

Where it is desired to wash and chop material, such as for example, root crop vegetables, for example, fodder beet, the fodder beet is loaded into the mixing and washing compartment 93. Prior to loading the material into the mixing and washing compartment 93, the partition door 98 is closed and the outlets 135 are closed by the closure members 140. Water is delivered into the mixing and washing compartment 93 to a level below the dispensing compartment 94. The rotor 100 is rotated in the direction of the arrow D, thereby agitating the fodder beet. The action of the rotor 100 on the fodder beet causes the beet to rub off each other and off the rotor as well as the walls and base of the container 81, thereby causing dirt and muck to be removed from the fodder beet with the assistance of the water. When the fodder beet is sufficiently clean, with the rotor 100 continuing to rotate, the two doors 140 are suddenly opened, thus rapidly sluicing the water from the mixing and washing compartment 93 through the outlet 135. The rapid sluicing the water through the outlet 135 causes muck and debris which collects on the base 87 of the container 81 to be washed out of the mixing and washing compartment 93 with the water. The side wall 163 and end walls 164 of the chopper 84 are hinged upwardly to form the hopper 162. The chopper 84 is pivoted into the operable position of Fig. 9 by the ram 156. The door 119 is pivoted by the ram 123 into the open position to form with the hopper 162 the duct 173 which communicates the outlet 118 with the chopper 84. The partition door 98 is then opened. The rotational action of the rotor 100 in the direction of the arrow D urges the fodder beet into the dispensing compartment 94. The fodder beet is delivered towards the outlet 118 by the auger 112. The spikes 117 fling the beet outwardly through the outlet 118 into the duct 173. The action of the chopping drum 14 rotating in the direction of the arrow A draws the beet towards the passageway 28 for chopping therein as already described. The chopping action of the chopper 84 is identical to the chopping action of the chopper 1 already described. Chopped fodder beet of relatively constant size is dispensed onto the ground or into a container as desired beneath the chopper 84.

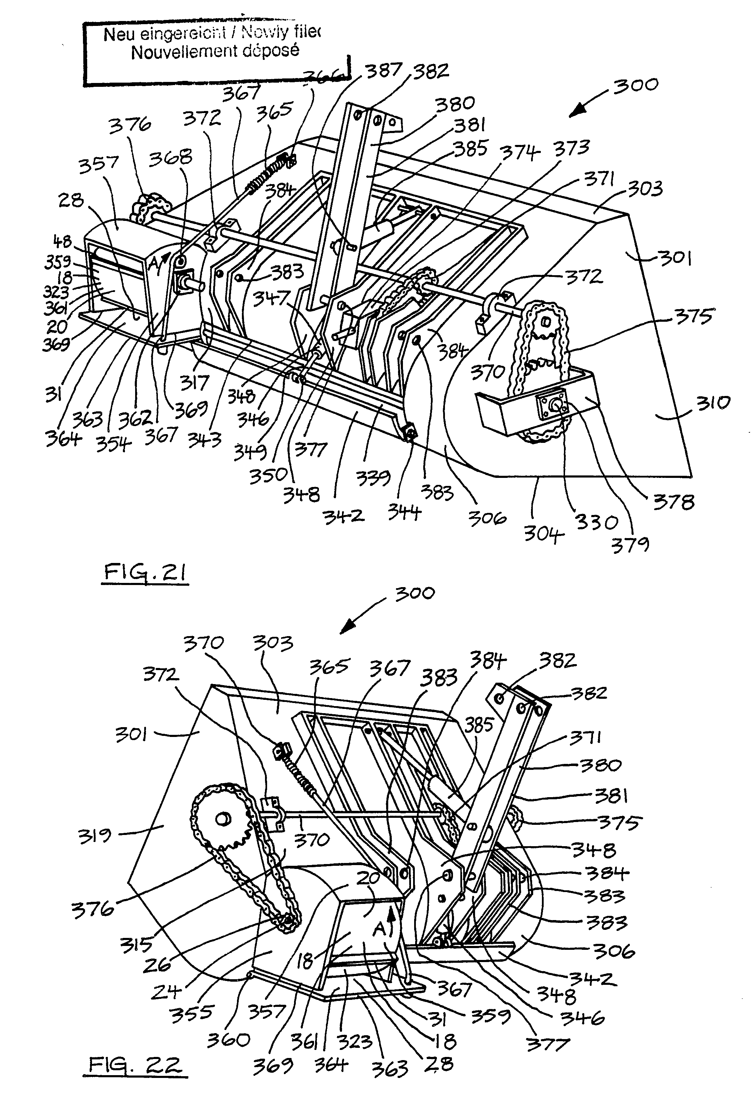

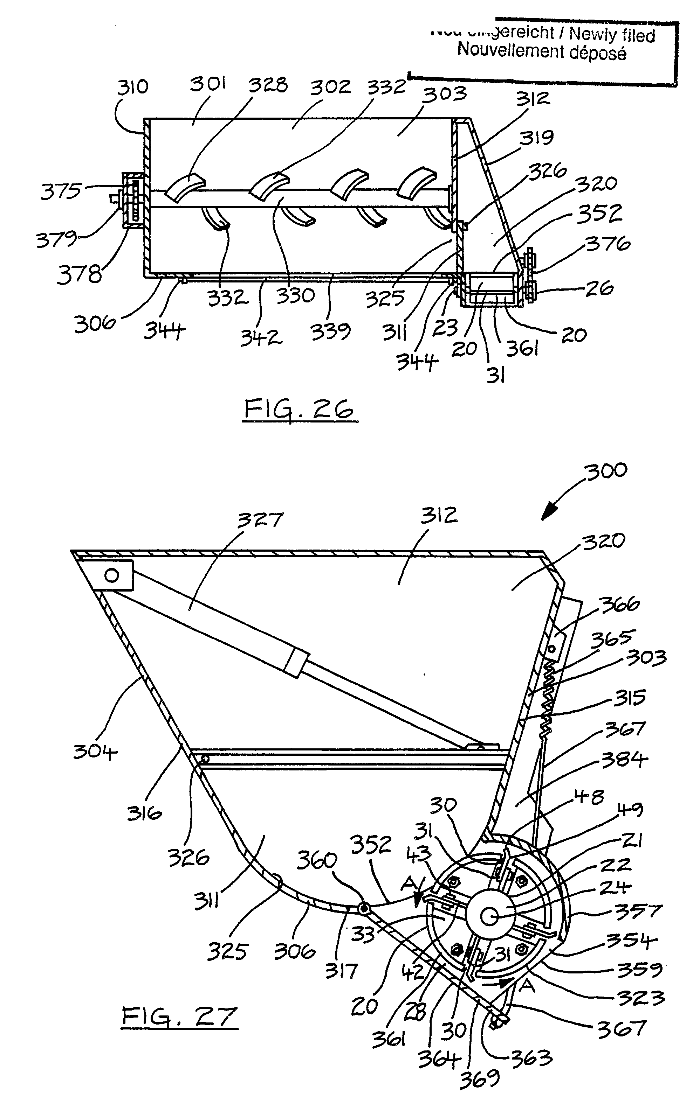

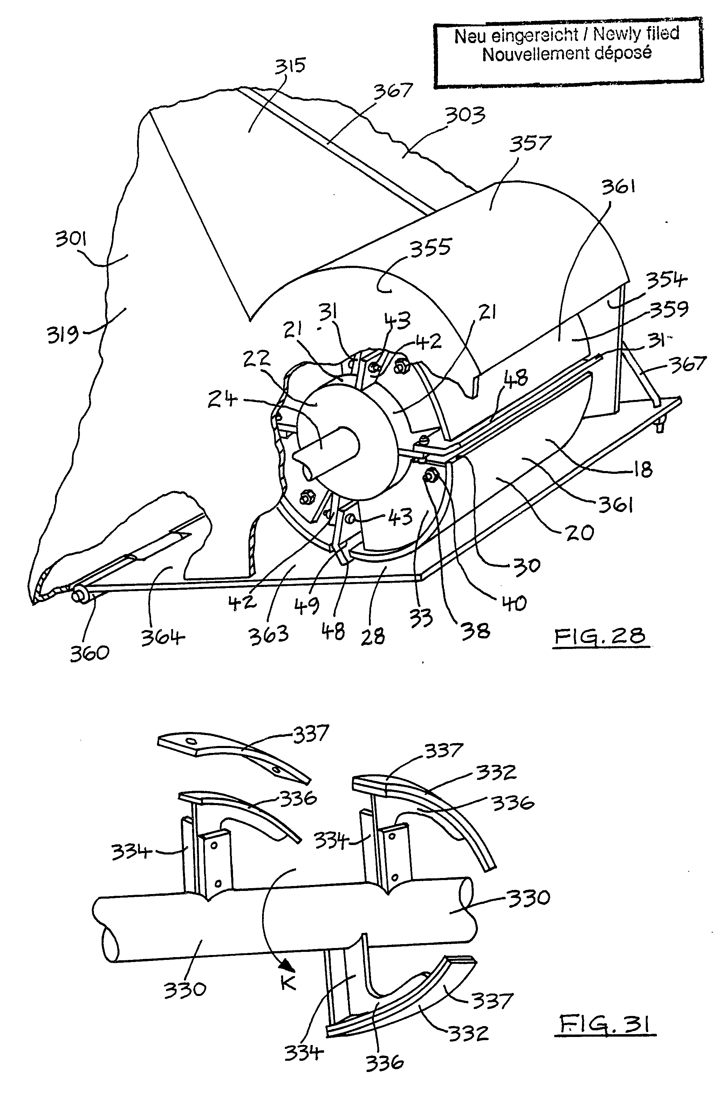

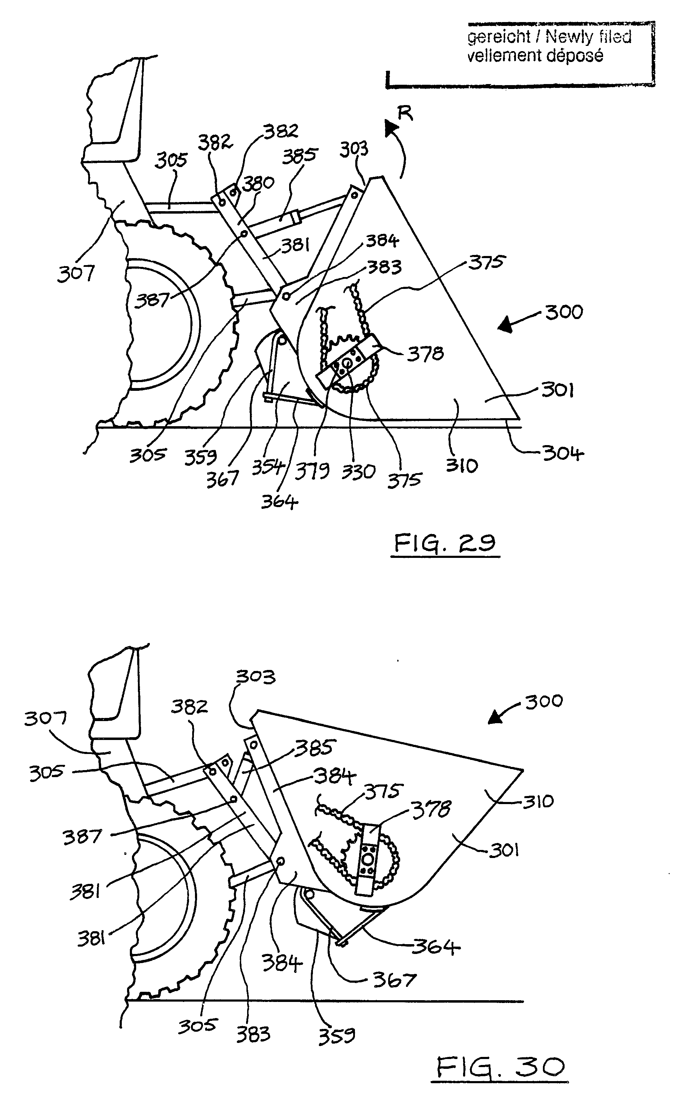

Referring now to Figs. 21 to 31 there is illustrated apparatus according to another embodiment of the invention indicated generally by the reference numeral 300 for washing and chopping material, such as root crop vegetables, for example fodder beet for animal feed. In this embodiment of the invention, the apparatus 300 is suitable for mounting on the three point linkage of a tractor or the back acter arm of a tractor. The apparatus 300 is illustrated mounted on the three point linkage 305 of a tractor, the rear portion 307 of which is illustrated in Figs. 29 and 30. The apparatus 300 comprises a container 301 of substantially bucket shaped construction of the type which would normally be fitted to a three point linkage or back acter arm of a tractor for scooping up material. The container 301 defines an interior region which forms a washing compartment 302 for washing the fodder beet. The container 301 comprises side walls 303 and 304 which diverge upwardly from an arcuate base 306 of partly circular section. An end wall 310 closes one end of the container 301 and the washing compartment 302, while an end wall 312 and a pivotal closure member 311 close the other end of the compartment 302. Portions 315 and 316 extending from the side walls 303 and 304, respectively, and a portion 317 extending from the arcuate base 306 extend outwardly of the end wall 312. An end wall 319 extends between the portions 315, 316 and 317 to form a delivery compartment 320 for delivering washed fodder beet from the washing compartment 302 to a chopper 323 mounted on the portion 317 of the base 306 for chopping the fodder beet. The chopper 323 is somewhat similar to the chopper 1 of Figs. 1 to 8 and similar components are identified by the same reference numerals. However, the aspects of the chopper 323 which are different to the chopper 1 will be described in detail below. The end wall 312 defines with the base 306 and the lower portions of the side walls 303 and 304 a material outlet 325 for delivering fodder beet from the washing compartment 302 through the delivery compartment 320 into the chopper 323. The closure member 311 is pivotally connected by a pivot pin 326 to the end wall 310 and is pivotal by a hydraulic ram 327 from an open position illustrated in Fig. 25 with the outlet 325 open to a closed position illustrated in Fig. 27 with the outlet 325 closed.

Agitating means for agitating the fodder beet in the washing compartment 302 comprises a rotor 328. The rotor 328 comprises a shaft 330 rotatable in bearings (not shown) in the end walls 310 and 312. Paddles 332 are carried on carrier members 334 extending radially outwardly of the shaft 330. The paddles 332 are formed by shoes 336 of metal welded to the carrier members 334, and strips 337 of semi-rigid plastics material are secured to the shoes 336. The paddles 332 are arranged relative to the longitudinal axis of the shaft 330 to agitate the fodder beet on rotation of the rotor 328. As the rotor 328 rotates in the direction of the arrow K the angle of the shoes 332 relative to the longitudinal axis of the shaft 330 is such as to cause the paddles 332 to act with an auger type action on the fodder beet to urge the fodder beet in the direction of the arrow L towards the material outlet 325.

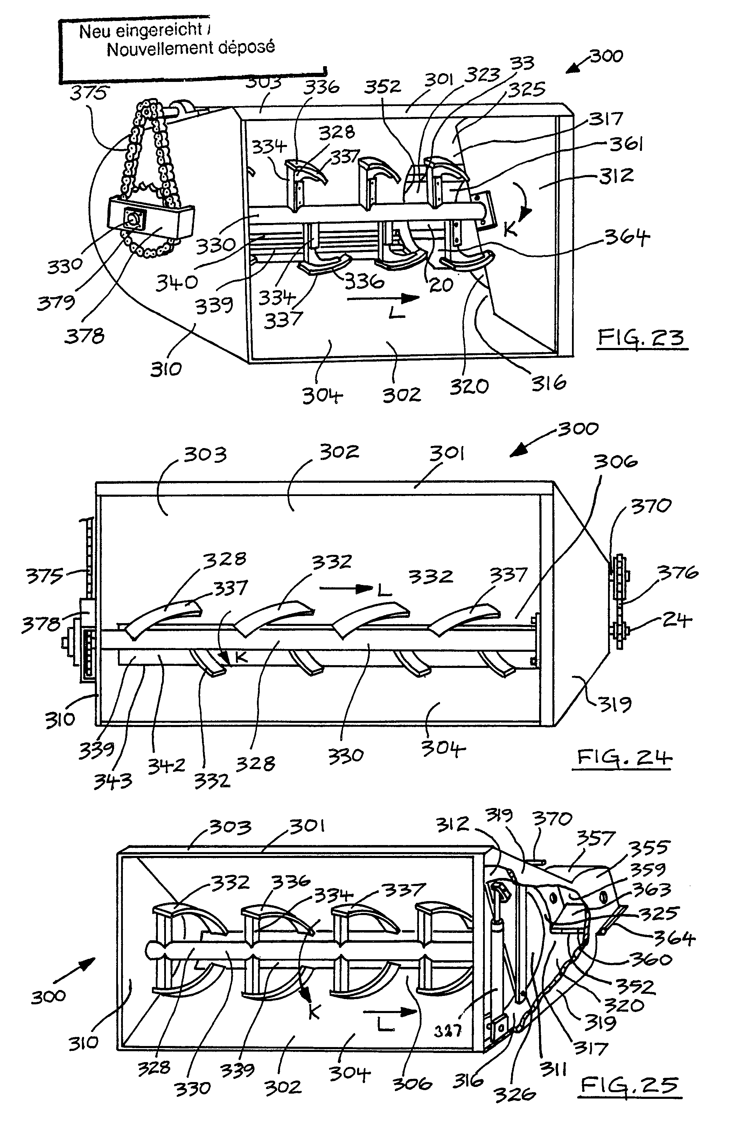

A washing liquid outlet 339 in the arcuate base 306 drains washing liquids, such as water from the washing compartment 302 on the fodder beet being washed. A grid formed by a plurality of bars 340 of steel extending longitudinally of the shaft 330 are mounted in the outlet 339 to retain the fodder beet in the washing compartment 302 on draining of the water. A closure member 342 hingedly connected to the container 301 closes the outlet 339 by sealably engaging the periphery 343 of the outlet 339. Hinges 344 at each end of the closure member 342 hingedly connects the door 342 to the base 306 adjacent the outlet 339. A ram 346 pivots the closure member 340 from a closed position illustrated in Fig. 22 to an open position illustrated in Fig. 21 for draining the washing compartment 302. The ram 346 comprises a cylinder 347 pivotally connected to the side wall 303 by brackets 348, and a piston rod 349 pivotally connected to the door 342 by a bracket 350.

Returning now to the chopper 323, an opening 352 in the portion 317 of the base 306 communicates the delivery compartment 320 with the chopper 323. The chopper 323 comprises a housing which comprises a pair of end walls 354 and 355. The end wall 354 extends downwardly from the portion 317 of the base 306, while the end wall 355 is formed by a portion extending from the end wall 319. An arcuate side wall 357 extends downwardly from the portion 317 between the end walls 354 and 355. A chopping drum 361 is rotatable in bearings 362 mounted in the end walls 354 and 355 which rotatably engage stub shafts 23 and 24 of the chopping drum 361. The chopping drum 361 is substantially similar to the chopping drum 14 of the chopper 1 with the exception that the chopping drum 361 only comprises one set of four drum segments 20 and four cutting blades 31. A side wall 363 is pivotally connected to and extends downwardly from the portion 317 of the base 306 and acts as a pressure plate 364 similar to the pressure plates 51 of the chopper 1. However, in this embodiment of the invention, only one pressure plate 364 is provided. A piano type hinge 360 pivotally connects the pressure plate 364 to the portion 317 of the base 306. A tension spring 365 anchored by a bracket 366 to the side wall 303 is connected by a steel cable 367 to the pressure plate 364 for urging the pressure plate 364 towards the chopping drum 361. A pulley 368 rotatably mounted on the side wall 354 directs the cable 367 to the pressure plate 364. Stops means, in this case formed by edges 369 of the side walls 354 and 355, retain the pressure plate 364 spaced apart from the chopping drum 361 and the cutting blades 31 for forming the passageway 28. The pressure plate 364 defines with the end walls 354 and 355 and the side wall 357 an outlet 359 through which chopped material is dispensed from the chopper 323.

Drive transmission means for driving the rotor 328 and the chopping drum 361 comprises an intermediate drive shaft 370 rotatable in bearings 372 mounted on the side wall 303. The intermediate drive shaft 370 is driven by a chain and sprocket drive 371 from a gear box 373 mounted on the side wall 303. An input drive shaft 374 is provided to the gear box 373 for receiving drive from a power take off shaft or the like of a tractor. A chain and sprocket drive 375 at one end of the intermediate drive shaft 370 drives the rotor 328 in the direction of the arrow K. A chain and sprocket drive 376 on the other end of the intermediate drive shaft 370 drives the chopping drum 361 in the direction of the arrow A.

A bracket 378 on the end wall 310 carries a bearing 379 for rotatably supporting the shaft 330 of the rotor 328 extending from the end wall 310. The gear ratio between the input drive shaft 374 and the rotor 328 is 56:1. The gear ratio between the input drive shaft 374 and the chopping drum 361 is 2:1. Thus, when the input drive shaft 374 is rotated at a speed of 540 revs per minute, the rotor and chopping drum rotate at 9 revs per minute and 270 revs per minute, respectively.

A mounting assembly 380 is provided on the side wall 303 for mounting the container 301 to a three point linkage 305 of the tractor 307. The mounting assembly 380 comprises a pivot arm 381 pivotally connected to the side wall 303 by a pivot pin 377 carried on the brackets 348. Holes 382 at the free end of the arm 381 are provided for engaging the top linkage of the three point linkage 305. Holes 383 in brackets 384 mounted on the side wall 303 engage the lower two links of the three point linkage 305. A hydraulic ram 385 pivotally connected to the side wall 303 by the brackets 348 and also pivotally connected to the pivot arm 381 at 387 pivots the container 301 relative to the pivot arm 381 for tipping the container 301 for scooping up fodder beet or the like to be chopped.

In this embodiment of the invention, the radius of the outer circumferential surface 18 of the drum 14 defined by the drum segments 20 is 145 mm. The radius of the cutting edge 48 of the blades 31 from the central longitudinal axis 19 of the drum 14 is 160 mm. These dimensions are similar to those of the chopping drum 14 of the chopper of Figs. 1 to 8.

In use, the apparatus 300 is mounted on the three point linkage 305 of the tractor 307 with the top linkage engaging the holes 382 in the pivot arm 381 and the lower two linkages engaging holes 383 in the brackets 384. The shaft 374 of the gear box 373 is connected to the power take off shaft of the tractor 307. The hydraulic rams 327, 373 and 385 are connected to the hydraulic system of the tractor 307 by hydraulic hoses (not shown). With the closure member 342 closed and the closure member 311 closed, the container 301 is pivoted downwardly relative to the pivot arm 381 as illustrated in Fig. 29 by the ram 385. The container 301 is then driven into a heap of fodder beet and the beet is scooped into the washing compartment 302 of the container 301 by pivoting the container in the direction of the arrow R upwardly towards the pivot arm 381 by the ram 356 as illustrated in Fig. 30. The apparatus 300 is then raised on the three point linkage 305 of the tractor 307. The operation of such three point linkages will be well known to those skilled in the art. Water is then delivered into the washing compartment 302 and the rotor 328 is rotated, thereby agitating and washing the fodder beet. The washing action of the rotor 328 is substantially similar to the rotor 100 of the apparatus 80. On the fodder beet being sufficiently washed with the container 301 still in the position illustrated in Fig. 30, the closure member 342 is rapidly opened by the ram 346, thereby sluicing the water rapidly from the washing compartment 302 which carries muck and other debris washed from the fodder beet through the outlet 339. On the water and muck being delivered through the outlet 339, the closure member 311 is pivoted upwardly to open the material outlet 325, thereby communicating the washing compartment 302 with the chopper 323. The rotational action of the rotor in the direction of the arrow K as already described urges the fodder beet towards the material outlet 325 and into the delivery compartment 320. The rotational action of the chopping drum 361 chops lumps from the fodder beet which are in turn drawn through the passageway 28. The action of the cutting blades 31 co-operating with the pressure plate 364 chops the lumps into particles of relatively of constant size. The chopped particles are delivered from the passageway 28 and are collected beneath the chopper 323 on the ground or in a tray or other such container or the like.

While the chopper of Figs. 1 to 8 has been described as being mounted on two different types of apparatus for washing and chopping material, namely the apparatus 80 and the apparatus 300, it will be readily apparent to those skilled in the art that the chopper 1 may be mounted on any other apparatus. Indeed, as described with reference to Figs. 1 to 8 the chopper may be operated independently of any other apparatus.

While particular shape, size and construction of washing and chopping apparatus have been described, other shapes, sizes and constructions of washing and chopping apparatus could be used without departing from the scope of the invention.

While it is preferable in the case of the apparatus of Figs. 9 to 20, it is not essential that the chopper should be pivotally mounted beneath the material outlet. Indeed, in certain cases, it is envisaged that the chopper may be fixedly mounted. Where it is desired that the chopper should be movable from an operable to an inoperable position, the chopper may be mounted by any other suitable means, for example, the chopper may be slidably mounted or the like.

It is envisaged that other shapes and construction of chopping drum besides that illustrated may be used. Indeed, it will be apparent to those skilled in the art that it is not necessary that the outer surface of the drum be formed by a plurality of segments. The outer surface of the drum may be formed by a continuous cylindrical member and the blades would be mounted directly on the cylindrical member. However, one of the advantages of forming the outer circumferential surface of the chopping drum in segments is that it permits blades of relatively short radial length to be used.

Needless to say, where drum segments are used to form the outer circumferential surface of the chopping drum, the drum segments may be mounted on an inner drum or directly onto a shaft by any other suitable means. Needless to say, more or less than four segments may be provided around the shaft, as indeed it will be appreciated that more or less than four cutting blades may be provided spaced apart around the shaft. Indeed, in certain cases the chopping drum may be provided with one single cutting blade only. It is also envisaged that while the cutting blades have been described with their cutting edge extending longitudinally of the shaft, the cutting edge need not extend exactly longitudinally of the shaft but in a generally longitudinal direction. For example, the cutting edges of the blades may form portion of a relatively wide angled helix.

Needless to say, any other suitable drive means for driving the chopping drum and for driving the agitating means and dispensing means may be provided without departing from the scope of the invention. It will of course be appreciated that where the chopper is mounted on a container of the construction of the container of Figs. 9 to 20 the container may be provided without the dispensing compartment. In which case, the container would only comprise a washing compartment. Needless to say, where a dispensing compartment is provided, it will be appreciated any other suitable dispensing means may be provided in the dispensing compartment besides an auger. Indeed, in certain cases it is envisaged that the dispensing means may be dispensed with altogether.

While the containers of the apparatus of Figs. 9 to 20 and Figs. 21 to 31 have been described as comprising particular constructions and shape of material outlet and washing liquid outlet, any other suitable shapes and construction of outlet may be provided without departing from the scope of the invention. Indeed, other suitable closure members may be provided for closing the material and washing liquid outlets without departing from the scope of the invention.

It will be appreciated that the chopper may be provided with any suitable type of housing besides the housing described. Indeed, in certain cases, it is envisaged that the housing of the chopper need not necessarily comprise a framework. Indeed, strictly speaking, the chopper mounted on the apparatus of Figs. 21 to 31 does not comprise a framework. Further, while the blades of the chopper of Figs. 1 to 8 have been described as being staggered, this is not essential.

While it is advantageous, it is not essential that the cutting edge of the blade should be directed in the direction of rotation of the drum. It will of course be appreciated that any other suitable mounting means for mounting the blades to the drum may be used without departing from the scope of the invention.

Needless to say, any number of pressure plates may be provided as desired. It will, of course, be appreciated that means other than a compression spring may be used for urging the pressure plates into engagement with the drum. Further, it will be appreciated that it is not essential for the stop means which retain the pressure plate spaced apart from the chopping drum to be adjustable. Indeed, in the apparatus of Figs. 21 to 31 the stop means is not adjustable. Where adjustable stop means are provided, any other suitable adjusting arrangements may be provided without departing from the scope of the invention.

While the chopper and apparatus has been described for chopping fodder beet and in the case of the apparatus for washing fodder beet, it will be appreciated that the chopper may be used for chopping any other material besides fodder beet. Furthermore, the chopper may be used for chopping any other material besides root crop vegetables or animal feed. Similarly, the apparatus may be used for washing materials other than fodder beet or other root crop vegetables.

It will also be appreciated that the chopper may be mounted in any other suitable or desired location to the container of the apparatus of Figs. 9 to 20. Indeed, in certain cases, it is envisaged that a material outlet may be provided directly from the container to the chopper and in certain cases it is envisaged that the chopper may be mounted beneath the container. It will also of course be appreciated that the chopper may be mounted at any other suitable or desired location on the container of the apparatus of Figs. 21 to 31.

It is also envisaged in certain cases that the chopper may be mounted in the material outlet if desired.

While the gear ratio of the transmission means has been described to give particular rotational speeds of the rotor and chopping drum, it will be appreciated that the gear ratio may be altered to give other ratios of rotational speed of the rotor and chopping drum. It is envisaged that particularly good results are obtained with the chopping drum rotating at a speed in the range of 200 revs per minute to 500 revs per minute. It is believed that adequate results will be achieved once the rotational speed of the chopping drum is maintained at or above 150 revs per minute. Indeed, theoretically, there is no upper limit to the rotational speed of the chopping drum at which goods results would be achieved. Furthermore, good washing results would be achieved with an agitating rotor speed in the range of 2 revs per minute to 30 revs per minute. It is also envisaged that the dispensing auger may be operated at a speed in the range of 70 revs per minute to 250 revs per minute.

While the side wall which defines the passageway and co-operates with the chopping drum of the choppers described has been described as being a pressure plate, while this is preferable, it is not essential. In certain cases, it is envisaged that the passageway may be formed by a fixed side wall.

In certain cases, it is envisaged that the container of the apparatus of Figs. 9 to 20 may be mounted on the chassis to be tiltable about an axis at one end wall or the other to permit the container to be tilted downwardly towards the end of the material outlet to facilitate discharging material through the material outlet.

While specific dimensions and ranges of dimensions and specific rotational speeds and ranges of specific rotational speeds have been given in the specification, it will be readily apparent to those skilled in the art that the chopper and apparatus of Figs. 9 to 20 and Figs. 21 to 31 could be provided and could operate with dimensions and speeds and ratios outside the ranges given without departing from the scope of the invention. The ranges of dimensions, speeds and ratios are given for choppers and apparatus which will provide good results. However, choppers and apparatus giving less good results could still be provided within the scope of the invention.

Further, while the apparatus of Figs. 9 to 20 and Figs. 21 to 31 have been described as comprising choppers according to the invention of the type described with reference to Figs. 1 to 8, it is envisaged in certain cases the apparatus of Figs. 9 to 20 and 21 to 31 may be provided with different types of choppers without departing from the scope of the invention. In other words, the choppers provided with the apparatus would not fall within the scope of the choppers of the invention.

Additionally, it is envisaged that agitating means for agitating and mixing in the mixing and/or washing compartments could be provided besides the rotors described without departing from the scope of the invention.

It is also envisaged that the cutting blades may be mounted on the chopping drum so that the radial length of the cutting blades extending beyond the outer circumferential surface of the drum may be variable. For example, the cutting blades may be mounted on the mounting brackets of the inner drum so that the cutting edges would be adjustable radially outwardly. In which case, it is envisaged that the particle size of the chopped particles of the material chopped may be varied by varying the radial length of the blade extending from the outer circumferential surface of the drum. In other words, the radial length of the blade from the outer circumferential surface of the drum to the cutting edge of the blade. It is envisaged that by shortening this radial length the particle size would be reduced, while increasing this length would increase the particle size.

Furthermore, it is envisaged that the particle size may also be varied by varying the rotational speed of the chopping drum.

## Claims

1. A chopper for chopping material, the chopper being of the type comprising a housing (2,3), and a chopping means (14) for chopping the material mounted in the housing (2,3), characterised in that the housing (2,3) comprises a side wall (12,51), and the chopping means (14) comprises a chopping drum (14) defining an outer circumferential drum surface (18) and having a central longitudinal axis (19), the chopping drum (14) being rotatably mounted in the housing (2,3) about the central longitudinal axis (19) with the outer drum surface (18) spaced apart from the side wall (12,51), the outer drum surface (18) defining with the side wall (12,51) a passageway (28) for the passage of material to be chopped, and at least one cutting blade (31) extending radially from the outer drum surface (18) and terminating in an elongated cutting edge (48) extending in a generally longitudinal direction relative to the chopping drum (14) and co-operating with the side wall (12,51) of the housing (2,3) for chopping the material.

2. A chopper as claimed in Claim 1 characterised in that a plurality of cutting blades (31) are provided, the cutting blades (31) being circumferentially spaced apart around the chopping drum (14).

3. A chopper as claimed in Claim 1 or 2 characterised in that the housing (2,3) comprises a pair of spaced apart end walls (10,11) extending generally transversely relative to the side wall (12,51), the chopping drum (14) being rotatably mounted in the end walls (10,11), and guide means (70) are provided for guiding the material to be chopped into the passageway (28).

4. A chopper as claimed in any preceding claim characterised in that the side wall (12,51) of the housing (2,3) comprises a pressure plate (51) resiliently urged towards the chopping drum (14) and engagable with stop means (62,63) for retaining the pressure plate (51) spaced apart from the outer drum surface (18), the pressure plate (51) being pivotally connected (52) to the housing (2,3) about a pivot axis, the pivot axis extending in a generally longitudinal direction relative to the central longitudinal axis (19) of the chopping drum (14).

5. A chopper as claimed in any preceding claim characterised in that each cutting blade (31) is bent (49) adjacent the cutting edge (48) for directing the cutting edge (48) towards the direction of rotation (A) of the chopping drum (14).

6. A chopper as claimed in any preceding claim characterised in that the outer drum surface (18) is defined by a plurality of drum segments (20) extending generally longitudinally of the drum and being spaced apart circumferentially around the central longitudinal axis (19), each pair of adjacent drum segments (20) defining an elongated slot (30) therebetween extending in a generally longitudinal direction relative to the chopping drum (14) for accommodating a respective cutting blade (31) extending therethrough.

7. A chopper as claimed in Claim 6 characterised in that the drum segments (20) are divided intermediate their longitudinal length to form sets (29) of drum segments (20), the sets (29) of drum segments (20) being arranged in side by side relationship relative to each other longitudinally of the chopping drum (14), the slots (30) defined by each set (29) of drum segments (20) being offset from the slots (30) defined by the other sets (29) of drum segments (30).

8. Apparatus for chopping material, the apparatus being of the type comprising a container (81,301) defining an interior region (93,94,302) for the material, and a chopper (84,323) for chopping the material, characterised in that the interior region (93,94,302) of the container (81,301) forms a washing compartment (93,302) for washing the material prior to chopping, agitating means (100,328) being mounted in the interior region (93,302) of the container (81,301) for agitating the material during washing, the container (81,301) being provided with a material outlet (118,325) from the interior region (93,94,302), and a washing liquid outlet (118,325) from the interior region (93,302), a closure member (140,342) for closing the washing liquid outlet (135,339), the closure member (140,342) being openable for sluicing the washing liquid from the interior region (93,302), the chopper (84,323) being mounted for receiving material from the material outlet (118,325).

9. Apparatus as claimed in Claim 8 characterised in that the chopper (84) is movable from an operable position for receiving the material from the material outlet (118) to an inoperable position spaced apart from the material outlet (118) for permitting material to be dispensed from the apparatus (80) unchopped.

10. Apparatus as claimed in Claim 9 characterised in that the washing liquid outlet (135) is provided from the bottom (306) of the interior region (93) and the material outlet (118) is provided in a side wall (95) of the container (81), the chopper (84) being pivotally mounted on the container (81) adjacent a lower edge of the material outlet (118).

11. Apparatus as claimed in any of Claims 8 to 10 characterised in that guide means (162) are mounted between the material outlet (118) and the chopper (84) for guiding the material from the material outlet (118) into the chopper (84), the guide means (162) being pivotally mounted on the chopper (84) and being pivotal from a position for directing material from the material outlet (118) to the chopper (84) to a position protecting the chopper (84), a closure member (119) being mounted on the container (81) for closing the material outlet (118), the closure member (119) being movable from a position closing the material outlet (118) to a position forming part of the guide means (162), the closure member (119) being pivotally mounted along an upper edge of the material outlet (118).

12. Apparatus as claimed in any of Claims 8 to 11 characterised in that the interior region (93,94) of the container (81) forms a mixing compartment (93) and a dispensing compartment (94), closure means (98) being mounted in the interior region (93,94) for selectively isolating the dispensing compartment (94) from the mixing compartment (93), the mixing compartment (93) forming the washing compartment (93), and the agitating means (100) being mounted in the mixing compartment (93), the material outlet (118) being provided from the dispensing compartment (94), and dispensing means (112) being mounted in the dispensing compartment (94) for dispensing material through the material outlet (118).

13. Apparatus as claimed in Claim 12 characterised in that the mixing compartment (93) comprises a base (87) of substantially semi-circular cross section and a pair of spaced apart longitudinally extending side walls (89,90) extending upwardly from each side of the base (87), and a pair of spaced apart end walls (91,92) extending between the base (87) and the side walls (89,90), the dispensing compartment (94) extending sidewardly outwardly from and longitudinally relative to the mixing compartment (93) and being formed by a wall (95,88,96,97) disposed between the base (87) and one side wall (89), the chopper (84) being pivotal into the inoperable position beneath the dispensing compartment (94).

14. Apparatus as claimed in any of Claims 8 to 13 characterised in that the chopper (84,323) is a chopper according to any of Claims 1 to 7.

FIG. 1

FIG. 7

FIG. 6

EP 0 392 871 A2

FIG. 2

FIG. 3

**FIG.13**

**FIG.4**

Neu eingereicht
Nouvellement deposé

EP 0 392 871 A2

FIG.5

FIG. 8.

FIG. 9

FIG.10

EP 0 392 871 A2

FIG 11

EP 0 392 871 A2

Neu eingereicht / Newly filed
Nouvellement déposé

FIG. 12

FIG. 14.

FIG. 15

FIG.16

EP 0 392 871 A2

FIG.17

FIG 18

Neu eingereicht / Newly filed
Nouvellement déposé

FIG. 20

FIG. 19

FIG. 21

FIG. 22

FIG. 23

FIG. 24

FIG. 25

EP 0 392 871 A2

FIG. 26

FIG. 27

FIG. 28

FIG. 31

FIG. 29

FIG. 30